# EUROPÄISCHE PATENTANMELDUNG

(11) **EP 0 987 663 A1**
(43) Veröffentlichungstag der Anmeldung: **22.03.2000**
(21) Anmeldenummer: 98117368.5
(22) Anmeldetag: 14.09.1998
(51) Int. Cl.: G08B 17/103, G08B 29/18

(54) **Optischer Rauchmelder nach dem Extinktionsprinzip und Verfahren zur Kompensation von dessen Temperaturdrift**

(71) Anmelder: Siemens Building Technologies AG, 8708 Männedorf (CH)
(72) Erfinder: Muller, Kurt, Dr., 8708 Männedorf (CH); Kunz, Peter, 8625 Gossau (ZH) (CH); Wieser, Dieter, 8700 Küsnacht (CH); Loepfe, Markus, Dr., 8700 Küsnacht (CH)
(74) Vertreter: Dittrich, Horst, Dr.

(57) **Zusammenfassung**

Der Rauchmelder enthält eine optische Brücke (4) mit einer Lichtquelle (8), einer Mess-und einer Referenzstrecke (11 bzw. 11') und einem Mess- und einem Referenzempfänger (10 bzw. 10') und eine Auswerteschaltung (5). Die Auswerteschaltung (5) weist ein nicht-flüchtiges Speicherelement auf, in welchem die Temperaturdriftkurve der optischen Brücke (4) abgelegt ist, und es sind Mittel zur rechnerischen Kompensation des Einflusses der Temperaturdriftkurve auf das Meldersignal vorgesehen. Die optische Brücke (4) enthält als einzige optische Elemente neben der Lichtquelle (8) und den Empfängern (10, 10') zwei im Strahlengang nach der Lichtquelle (8) angeordnete Lochblenden.

Die Temperaturdriftkurve wird durch Heizen der Lichtquelle (8) und Bestimmung des Meldersignals bei verschiedenen Temperaturen ermittelt.

## Beschreibung

Die vorliegende Erfindung betrifft einen optischen Rauchmelder nach dem Extinktionsprinzip, mit einer eine Lichtquelle, eine Mess- und eine Referenzstrecke und einen Mess-und einen Referenzempfänger aufweisenden optischen Brücke, und mit einer Auswerteschaltung.

Beim Extinktionsmessverfahren wird bekanntlich ein Lichtstrahl durch die der Umgebungsluft und damit eventuellem Rauch zugängliche Messstrecke und durch die dem Rauch nicht zugängliche Referenzstrecke gesandt und es werden die beiden Empfangssignale miteinander verglichen. Da sowohl die Lichtstreuung an den Rauchpartikeln als auch die Absorption durch diese zur Extinktion beiträgt und das Licht von hellen Partikeln gestreut und von dunklen Partikeln absorbiert wird, besitzt das Extinktionsmessverfahren eine relativ gleichmässige Empfindlichkeit aufverschiedene Rauchpartikel und ist daher zur Detektion von Schwelbränden (helle Partikel) und von offenen Bränden (dunkle Partikel) gleichermassen geeignet.

Bei Anwendung des Extinktionsmessverfahrens bei Punktmeldern, das sind Rauchmelder, die vollständig in einem einzigen Gehäuse untergebracht sind, kann die Extinktion der Aerosole in der Luft nur über eine sehr kurze Messstrecke bestimmt werden, wodurch die Anforderungen an die Empfindlichkeit der Transmisionsmessung entsprechend steigen. So liegt bei einer Messstrecke von 10cm die Alarmschwelle von 4%/m bei einer Transmission von 99.6% der Referenztransmission. Sollen Transmissionswerte unterhalb der Alarmschwelle ausgelöst werden, müssen Werte von beispielsweise 99.96% Transmission erkennbar sein, was an die Stabilität der Elektronik, der Optoelektronik und der Mechanik von Punkt-Extinktionsmeldern, die in der Literatur auch als Durchlichtmelder bezeichnet werden, ausserordentlich hohe Anforderungen stellt. Derartige Durchlicht-oder Punkt-Extinktionsmelder sind beispielsweise in der EP-A-0 740 146 und in der EP-Patentanmeldung 97 109 747 beschrieben.

Eines der Hauptprobleme hinsichtlich der Stabilität derartiger Melder besteht in der Temperaturabhängigkeit der optischen Brücke. Diese Temperaturabhängigkeit ist dadurch begründet, dass einerseits die Empfindlichkeit der durch Fotodioden gebildeten Empfänger und andererseits die Emission der durch eine Leuchtdiode (LED oder IRED) gebildeten Lichtquelle temperaturabhängig ist. Dazu kommt noch, dass der Temperaturkoeffizient der Empfindlichkeit der beiden Fotodioden unterschiedlich ist. Man versucht das letztere Problem dadurch zu entschärfen, dass manjeweils Paare von aufdem Silizium-Wafer benachbarten Fotodioden-Chips verwendet, wodurch aber die Temperaturabhängigkeit der Empfindlichkeit der Fotodioden von etwa 100 - 1000 ppm/°C nicht beseitigt wird.

Die Emission der Leuchtdiode ist stark temperaturabhängig (etwa 4000 - 8000 ppm/°C), was aber noch viel mehr stört, ist die Abhängigkeit des Temperaturkoeffizienten von der Emissionsrichtung. Der Grund dafür ist der temperaturabhängige Brechungsindex des Chip-Materials; bei Galliumarsenid beispielsweise vergrössert sich der Brechungsindex zwischen 20° und 50°C um etwa 0.23%. Das aus dem Chip austretende Licht wird stärker vom Lot weggebrochen und die nie ganz lotrecht stehende Lichtkeule verbreiten sich leicht, wodurch die bei Zimmertemperatur im Gleichgewicht befindliche optische Brücke aus dem Gleichgewicht gerät.

Durch die Erfindung sollen nun die bekannten Punkt-Extinktions- oder Durchlichtmelder dahingehend verbessert werden, dass die optische Brücke möglichst stabil ist und nicht mehr aus dem Gleichgewicht gerät.

Diese Aufgabe wird erfindungsgemäss dadurch gelöst, dass die Auswerteschaltung ein nichtflüchtiges Speicherelement aufweist, in welchem die Temperaturdriftkurve der optischen Brücke abgelegt ist, und dass Mittel zur rechnerische Kompensation des Einflusses der Temperaturdrift auf das Meldersignal vorgesehen sind.

Die Temperaturdriftkurve der optischen Brücke wird bei passender Gelegenheit, das ist beispielsweise entweder im Rahmen der Herstellung des Melders oder bei Melderrevisionen oder auch am montierten Melder vor Ort gemessen und beispielsweise in einem EEPROM der Auswerteschaltung abgelegt und ihr Einfluss auf das Meldersignal wird rechnerisch kompensiert. Die Messung der Temperaturdriftkurve am Abschluss der Melderherstellung wird nur einmal erfolgen, die Messung bei Melderevisionen entsprechend der Anzahl dieser Revisionen mehrmals, und die Messung vor Ort erfolgt vorzugsweise periodisch.

Eine erste bevorzugte Ausführungsform der erfindungsgemässen Melders ist dadurch gekennzeichnet, dass die optische Brücke als einzige optische Elemente neben der Lichtquelle und dem Mess- und dem Referenzempfänger zwei vor der Lichtquelle angeordnete Lochblenden aufweist.

Das bedeutet gegenüber bekannten Punkt-Extinktionsmeldern, die Parabolspiegel zur Fokussierung der von der Lichtquelle ausgesandten Strahlung aufden Mess- und den Referenzempfänger aufweisen, nicht nur eine Kosteneinsparung sondern auch eine Verbesserung der Stabilität, weil die Parabolspiegel bekanntlich temperaturempfindlich sind. Eine zweite bevorzugte Ausführungsform des erfindungsgemässen Melders ist dadurch gekennzeichnet, dass die Lichtquelle durch eine Leuchtdiode gebildet ist, deren Chip auf einer Mikroheizung innerhalb des Gehäuses der Leuchtdiode montiert ist.

Eine dritte bevorzugte Ausführungsform des erfindungsgemässen Melders ist dadurch gekennzeichnet, dass die optische Brücke aufeinem Träger aus einem Material mit guter Wärmeleitfähigkeit montiert und dass dieser Träger mit einer Heizung versehen ist.

Eine vierte bevorzugte Ausführungsform des erfindungsgemässen Melders ist dadurch gekennzeichnet, dass die Lichtquelle in einer ein Luftreservoir enthaltenden Kammer angeordnet ist. Diese Ausführungsform hat den Vorteil, dass die Kammer verglichen mit der Lichtquelle eine relativ grosse Oberfläche aufweist, so dass langsam in die Kammer eindiffundierende Rauchpartikel auf der Kammerwand und nicht nur aufder Lichtquelle abgelagert werden.

Die Erfindung betrifft weiter ein Verfahren zur Kompensation der Temperaturdrift der optischen Brücke des genannten Rauchmelders. Das erfindungsgemässe Verfahren ist dadurch gekennzeichnet, dass die Temperaturdriftkurve durch Heizen der Lichtquelle und Bestimmung des Meldersignals bei verschiedenen Temperaturen ermittelt wird.

Wenn der Chip der Leuchtdiode des Melders aufeiner Mikroheizung innerhalb des Diodengehäuses montiert ist, wird die Mikroheizung im montierten Melder vor Ort periodisch aktiviert und dabei die aktuelle Temperaturdriftkurve gemessen.

Wenn die optische Brücke aufeinem Träger aus einem Material mit guter Wärmeleitfähigkeit montiert und dieser Träger mit einer Heizung versehen ist, wird die Heizung im Rahmen des Herstellungsprozesses des Melders oder bei einer Melderrevision aktiviert und dabei die Temperaturdriftkurve gemessen.

Eine andere Möglichkeit zur Messung der Temperaturdriftkurve besteht darin, den Melder am Ende des Herstellungsprozesses in einen Ofen zu geben und an einen Datenbus anzuschliessen, und den Ofen zu heizen und dabei die Temperaturdriftkurve zu messen.

Im folgenden wird die Erfindung anhand eines Ausführungsbeispiels und der Zeichnungen näher erläutert; dabei zeigt:
Fig. 1 einen schematischen Axialschnitt durch einen erfindungsgemässen Melder; und
Fig. 2 ein Detail des Melders von Fig. 1.

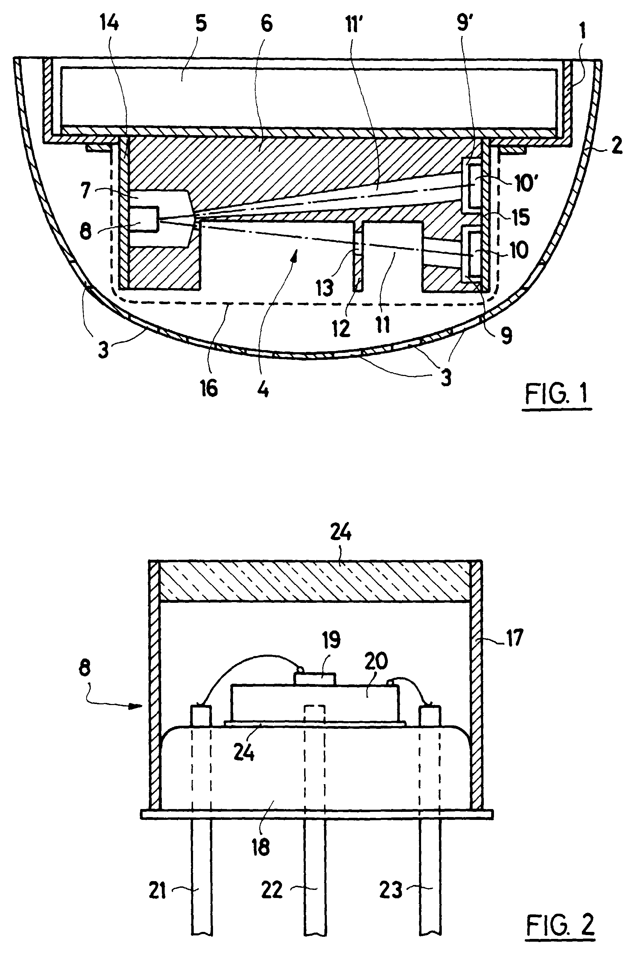

Der in Fig. 1 dargestellte Punkt-Extinktionsmelder besteht in bekannter Weise aus einem Meldereinsatz 1, der in einem vorzugsweise an der Decke des zu überwachenden Raumes montierten Sockel (nicht dargestellt) befestigbar ist, und aus einer über den Meldereinsatz 1 gestülpten Melderhaube 2, die im Bereich ihrer im Betriebszustand des Melders gegen den zu überwachenden Raum gerichteten Kuppe mit Raucheintrittsöffnungen 3 versehen ist. Der Meldereinsatz 1 umfasst im wesentlichen einen schachtelartigen Basiskörper, an dessen der Melderkuppe zugewandter Seite eine optische Brücke 4 und an dessen dem Meldersockel zugewandter Seite eine Auswerteschaltung 5 angeordnet ist.

Die optische Brücke 4 umfasst einen aufeinem gut wärmeleitenden Träger (nicht dargestellt) aus beispielsweise Aluminium angeordneten mechanischen Bauteil 6, welcher eine Kammer 7 mit einer Lichtquelle 8 und zwei Kammern 9 und 9' mit einem Mess-und einem Referenzempfänger 10 bzw. 10' aufweist. Zwischen der Kammer 7 mit der Lichtquelle 8 und der Kammer 9 mit dem Messempfänger 10 ist eine Messstrecke 11 und zwischen der Kammer 7 mit der Lichtquelle 8 und der Kammer 9' mit dem Referenzempfänger 10' ist eine Referenzstrecke 11' gebildet.

In der Messstrecke 11 ist mindestens ein Steg 12 mit einer Lochblende 13 angeordnet, welche seitlich eindringendes, störendes Fremdlicht abhält, aber das von der Lichtquelle 8 ausgesandte Nutzlicht unbeeinflusst lässt. Die die Lichtquelle 8 enthaltende Kammer 7 weist verglichen mit der Lichtquelle 8 eine relativ grosse Oberfläche auf, so dass langsam in die Kammer 7 eindiffundierende Rauchpartikel sich aufder gesamten Wand der Kammer und nicht nur aufder Lichtquelle 8 ablagern.

Die Mess- und die Referenzstrecke 11 bzw. 11' sind so ausgebildet, dass die Referenzstrecke 11' für von aussen in den Melder einströmenden Rauch nicht zugänglich und gegenüber diesem abgeschirmt und die Messstrecke 11 für diesen Rauch frei zugänglich ist. Die Lichtquelle 8 ist durch eine Licht, eventuell Infrarotstrahlung, aussendende Diode (LED bzw. IRED) gebildet, welche Lichtpulse in die Messstrecke 11 und die Referenzstrecke 11' sendet. Die Mess- und die Referenzstrecke 11 bzw. 11' enthalten mit Ausnahme der Glasfenster der Lichtquelle 8 und der Empfänger 10, 10' als einzige optische Elemente zwei im Strahlengang nach der Lichtquelle 8 angeordnete Lochblenden von etwa 1 bis 2mm Durchmessser.

Der Messempfänger 10 und der Referenzempfänger 10' sind baugleiche Fotodioden, die aufgrund einer entsprechenden Auslegung der Mess- und der Referenzstrecke 11 bzw. 11' die gleiche Menge von Strahlung der Lichtquelle 8 empfangen. Somit sind die durch die Strahlung der Lichtquelle 8 in den beiden Empfängern 10 und 10' ausgelösten Fotoströme gleich gross und die Differenz dieser beiden Fotoströme bleibt so lange null bis die optischen Eigenschaften der Messstrecke 11 durch Fremdeinfluss, beispielsweise durch eindringende Rauchpartikel, verändert werden. Dann ist die Differenz der Fotoströme nicht mehr null sondern steigt proportional zur Trübung oder Extinktion an.

Die Lichtquelle 8 ist auf einem plattenförmigen Träger 14 angeordnet, welcher auf die die Kammer 7 aufweisende Stirnfläche des Bauteils 6 aufgeschraubt ist und die Kammer 7 staubdicht abdichtet. Vom Träger 14 sind die entsprechenden elektrischen Verbindungen zur Auswerteelektronik 5 geführt. Die beiden Empfänger 10 und 10' sind auf einem gemeinsamen plattenförmigen Träger 15 angeordnet, der auf die die Kammern 9 und 9' enthaltende Stirnfläche des Bauteils 6 aufgeschraubt ist. Vom Träger 15 sind die entsprechenden elektrischen Verbindungen zur Auswerteelektronik 5 geführt. Der gesamte Bauteil 6 und somit die optische Brücke 4 ist von einem topfförmigen, feinen Gitter oder Netz 16 zum Schutz gegen das Eindringen von Insekten in die Messstrecke 11 umgeben.

Durch die Abdichtung der Kammer 7 und durch die die Kammern 9 und 9' abdeckende Trägerplatte 15 ist sichergestellt, dass praktisch keine Rauchpartikel in die Referenzstrecke 11' gelangen können, und es erfolgt auch keine Eindringen von Rauchpartikeln in die Referenzstrecke über die aus der Kammer 7 herausführende Lochblende der Messstrecke 11. Was in der Praxis beobachtet werden kann, ist höchstens eine sehr langsame Staubablagerung in der Mess- und der Referenzstrecke 11 bzw. 11', die sich aber in beiden Strecken etwa gleich auswirkt. Auf keinen Fall kann es vorkommen, dass Rauch in einer merkbaren Menge in die Referenzstrecke 11' gelangt und das Messergebnis beeinflusst.

Die Auswertung und Verarbeitung der Ausgangssignale des Messempfängers 10 und des Referenzempfängers 10' erfolgt in der Auswerteschaltung 5, die hier nicht näher beschrieben wird. Es wird in diesem Zusammenhang auf die europäische Patentanmeldung Nr. 97 109 747 verwiesen, welche eine ausführliche Beschreibung einer geeigneten Auswerteschaltung enthält.

Die optische Brücke 4 weist vom Prinzip her zwei potentielle Problempunkte auf, die im wesentlichen durch die Temperaturabhängigkeit der Empfindlichkeit der Fotodioden 10 und 10' und durch die Temperaturabhängigkeit der Emission der die Lichtquelle 8 bildenden LED bedingt sind. Die Temperaturabhängigkeit der Empfindlichkeit der Fotodioden beträgt etwa 100 bis 1000 ppm/°C und diejenige der Emission der LED 8 etwa 4000 bis 8000 ppm/°C. Auch wenn für die beiden Fotodioden 10 und 10' jeweils ein Paar von aufdem Silizium-Wafer benachbarten Fotodioden-Chips verwendet wird, kann nicht ausgeschlossen werden, dass die Temperaturkoeffizienten der Empfindlichkeit der beiden Fotodioden 10 und 10' unterschiedlich sind, so dass eine bei Zimmertemperatur abgeglichene optische Brücke 4 bei von der Zimmertemperatur abweichenden Temperaturen aus dem Gleichgewicht geraten würde.

Bei der LED kommt zur Temperaturabhängigkeit der Emission noch hinzu, dass der Temperturkoeffizient von der Emissionsrichtung abhängig ist. Das gilt auch für nackte LED-Chips, ohne Bonddraht quer über dem Chip, ohne Epoxy-Überdeckung und ohne Pressglasdeckel. Der Grund für diese Abhängigkeit des Temperaturkoeffizienten der Emission liegt im temperaturabhängigen Brechungsindex des Chip-Materials, wie beispielsweise Galliumarsenid, dessen Brechungsindex sich zwischen 20° und 50°C um etwa 0.23% erhöht. Das aus dem Chip austretende Licht wird mit steigender Temperatur stärker vom Lot weggebrochen und die nie ganz lotrecht aufdem Chip stehende Lichtkeule verbreitert sich leicht, wodurch die optische Brücke 4 ebenfalls aus dem Gleichgewicht gerät.

Zur Ausschaltung dieser möglichen Störeinflüsse wird die Temperaturdrift der optischen Brücke 4 gemessen und die dabei ermittelte Temperaturdriftkurve wird in einem nichtflüchtigen Speicherelement der Auswerteschaltung 5 abgelegt. Bei der Auswertung des Meldersignals wird dann die Temperaturdrift rechnerisch kompensiert. Dabei kann die Messung der Temperaturdrift entweder periodisch am montierten Melder im Feld oder im Rahmen des Herstellungsprozesses oder auch bei Melderevisionen erfolgen. Die Ablage der Temperaturdriftkurve erfolgt vorzugsweise in einem EEPROM des Melders.

Um die Temperaturdriftkurve im Rahmen des Herstellungsprozesses oder bei Melderrevisionen messen zu können, wird das die optische Brücke 4 tragende Aluminiumteil mit einer kleinen Heizung versehen. Diese Heizung wird am Ende des Herstellungsprozesses oder bei Melderrevisionen aktiviert und es werden Messungen bei verschiedenen Temperaturen vorgenommen, deren Ergebnisse, welche die Temperaturdriftkurve repräsentieren, im EEPROM des Melders abgelegt werden.

Die Heizung kann beispielsweise ein Leistungstransistor, ein PTC-Heizelelement, ein Dickfilmwiderstand oder ein Dünnfilmwiderstand auf Keramik sein. Bei der Anwendung dieser Methode wird vorausgesetzt, dass sich die Temperaturdriftkurve während der Lebensdauer des Melders oder während des Zeitraums zwischen zwei Melderrevisionen nicht ändert. Untersuchungen haben gezeigt, dass die Temperaturdriftkurve über lange Zeit erhalten bleibt und dass höchstens ihre absolute Lage leicht wegwandert, was aber durch eine Nachführung des Meldersignals kompensiert werden kann.

Die Temperaturdriftkurve kann im Rahmen des Herstellungsprozesses aber auch dadurch gemessen werden, dass man den Melder, der in diesem Fall keine spezielle Heizung benötigt, am Ende des Herstellungsprozesses in einen Ofen gibt und einen geeigneten Temperaturzyklus von beispielsweise 20° bis 60°C fährt und dabei die Temperaturdriftkurve im EEPROM des Melders ablegt.

Um die Temperaturdriftkurve an montierten Meldern im Feld messen zu können, wird eine heizbare Lichtquelle 8 verwendet. Ein Beispiel für eine solche Lichtquelle ist in Figur 2 in einer schematischen Ansicht mit aufgeschnittenem Gehäuse dargestellt. Darstellungsgemäss enthält die die Lichtquelle bildende LED 8 im wesentlichen einen von einer Gehäusewandung 17 umgebenen Sockel oder Boden 18, der den Chip 19 der LED trägt. Zwischen dem Chip 19 und dem Sockel 18 ist ein selbstregelndes PTC-Heizelement 20 vorgesehen. Die LED 8 weist drei Anschlussdrähte 21, 22 und 23 auf, wobei der Anschluss 21 mit dem Chip 19, die den Chip 19 tragende obere Fläche des PTC-Heizelements 20 mit dem Anschluss 23 und die aufdem Sockel 18 aufliegende untere Fläche des Heizelements 20 mit dem Anschluss 22 gebondet ist. Unter Bonden versteht man bekanntlich die Herstellung elektrischer Verbindungen innerhalb von Halbleiterelementen durch dünne Golddrähte.

Das PTC-Heizelement 20 besteht beispielsweise aus dotiertem Bariumtitanat, die Kontaktflächen sindjeweils mit Gold, Silber oder Aluminium beschichtet. Nach oben ist das Gehäuse durch einen Glasdeckel 24 abgeschlossen. Falls erforderlich, kann zwischen dem PTC-Heizelement 20 und dem Sockel 18 eine thermische Isolierung, beispielsweise eine Glasscheibe 24, vorgesehen sein. Das Heizelement 20 wird periodisch, beispielsweise einmal pro Tag, auf verschiedene Temperaturen erhitzt und es wird die Temperaturdriftkurve gemessen und im EEPROM des Melders abgelegt. Da nicht ausgeschlossen werden kann, dass es bei der Messung der Temperaturdriftkurve gerade gebrannt hat, wird zur Temperaturdriftkompensation des Meldersignals immer die Temperaturdriftkurve des Vortages verwendet.

Anstatt des PTC-Heizelements 20 kann auch eine andere Mikroheizung innerhalb des Gehäuses der LED 19 verwendet werden, beispielsweise ein Transistorchip oder eine Platindrahtheizung. Praktische Untersuchungen haben ergeben, dass eine Platindraht-Mikroheizung auf die selbe Temperaturdriftkurve führt wie ein Heizung der ganzen Lichtquelle 8 (Fig. 1) von aussen. Diese Methode ist sehr attraktiv, weil sie eine Adaption des Melders an die sich über die Melder-Lebensdauer verändernden Komponenteneigenschaften erlaubt. Sie setzt aber voraus, dass die beiden Fotodioden 10, 10' ein zusammenpassendes Paar bilden. Wenn dies nicht der Fall ist, dann muss der Beitrag der Fotodioden zur Temperaturdrift des Meldersignals nach einer der beiden beschriebenen Methoden bei der Melderherstellung ermittelt werden.

Bei allen drei beschriebenen Methoden kann die natürliche Temperaturfluktuation zwischen Tag und Nacht verwendet werden, um die Steigung der Temperaturdriftkurve im entsprechenden Abschnitt zu überprüfen und die Temperaturdriftkurve gegebenenfalls nachzuführen und im Notfall bei zu grossen Abweichungen eine Störungsanzeige auszugeben.

## Patentansprüche

1. Optischer Rauchmelder nach dem Extinktionsprinzip, mit einer eine Lichtquelle (8), eine Mess- und eine Referenzstrecke (11 bzw. 11') und einen Mess- und einen Referenzempfänger (10 bzw. 10') aufweisenden optischen Brücke (4), und mit einer Auswerteschaltung (5), dadurch gekennzeichnet, dass die Auswerteschaltung (5) ein nichtflüchtiges Speicherelement aufweist, in welchem die Temperaturdriftkurve der optischen Brücke (4) abgelegt ist, und dass Mittel zur rechnerischen Kompensation des Einflusses der Temperaturdriftkurve auf das Meldersignal vorgesehen sind.

2. Rauchmelder nach Anspruch 1, dadurch gekennzeichnet, dass die optische Brücke (4) als einzige optische Elemente neben der Lichtquelle (8) und dem Mess-und dem Referenzempfänger (10, bzw. 10') zwei vor der Lichtquelle (8) angeordnete Lochblenden aufweist.

3. Rauchmelder nach Anspruch 2, dadurch gekennzeichnet, dass die Lichtquelle (8) durch eine Leuchtdiode gebildet ist, deren Chip (19) auf einer Mikroheizung (20) innerhalb des Gehäuses (17) der Leuchtdiode montiert ist.

4. Rauchmelder nach einem der Ansprüche 1 bis 3, dadurch gekennzeichnet, dass die Lichtquelle (8) in einer ein Luftreservoir enthaltenden Kammer (7) angeordnet ist.

5. Rauchmelder nach Anspruch 5, dadurch gekennzeichnet, dass die Messstrecke (11) mindestens einen Steg (12) mit einer Lochblende (13) aufweist, welche seitlich eindringendes, störendes Fremdlicht abhält und die Strahlung der Lichtquelle (8) unbeeinflusst lässt.

6. Rauchmelder nach Anspruch 3, dadurch gekennzeichnet, dass die Mikroheizung (20) durch eine Platindrahtheizung oder ein PTC-Heizelement oder einen Transistorchip gebildet ist.

7. Rauchmelder nach Anspruch 6, dadurch gekennzeichnet, dass zwischen der Mikroheizung (20) und dem Gehäuseboden (18) eine thermische Isolierung (24) vorgesehen ist.

8. Rauchmelder nach Anspruch 1, dadurch gekennzeichnet, dass die optische Brücke (4) aufeinem Träger aus einem Material mit guter Wärmeleitfähigkeit montiert und dass dieser Träger mit einer Heizung versehen ist.

9. Rauchmelder nach Anspruch 8, dadurch gekennzeichnet, dass die Heizung durch einen Leistungstransistor oder ein PTC-Heizelement oder einen Dick-oder Dünnfilmwiderstand auf Keramik gebildet ist.

10. Verfahren zur Kompensation der Temperaturdrift der optischen Brücke (4) des Rauchmelders nach Anspruch 1, dadurch gekennzeichnet, dass die Temperaturdriftkurve durch Heizen der Lichtquelle (8) und Bestimmung des Meldersignals bei verschiedenen Temperaturen ermittelt wird.

11. Verfahren nach Anspruch 10, dadurch gekennzeichnet, dass bei einem Melder, dessen Lichtquelle (8) durch eine Leuchtdiode gebildet ist, welche einen mit einer Mikroheizung (20) heizbaren Chip (19) aufweist, die Mikroheizung (20) im montierten Melder vor Ort periodisch aktiviert und dabei die aktuelle Temperaturdriftkurve gemessen wird.

12. Verfahren nach Anspruch 10, dadurch gekennzeichnet, dass bei einem Meldet, desen optische Brücke (4) aufeinem mit einer Heizung versehenen Träger aus einem Material mit guter Wärmeleitfähigkeit montiert ist, die Heizung im Rahmen des Herstellungsprozesses des Melders oder bei einer Melderrevision aktiviert und dabei die Temperaturdriftkurve gemessen wird.

13. Verfahren nach Anspruch 10, dadurch gekennzeichnet, dass der Meldet am Ende des Herstellungsprozesses in einen Ofen gegeben und an einen Datenbus angeschlossen, und dass der Ofen geheizt und dabei die Temperaturdriftkurve gemessen wird.
